# EUROPEAN PATENT APPLICATION

(11) **EP 4 376 556 A2**
(43) Date of publication of application: **29.05.2024**
(21) Application number: 24170038.4
(22) Date of filing: 07.06.2018
(51) Int. Cl.: H05H 1/06

(54) **PLASMA CONFINEMENT SYSTEM AND METHODS FOR USE**

(30) Priority: 07.06.2017 US 201762516508 P
(62) Divisional of application: 18813105.6
(71) Applicant: University of Washington, Seattle, WA 98105-4721 (US); Lawrence Livermore National Security, LLC, Livermore CA 94550-9234 (US)
(72) Inventor: SHUMLAK, Uri, Seattle, 98105-4721 (US); MCLEAN, Harry S., Seattle, 98105-4721 (US); NELSON, BRIAN, A., Seattle, 98105-4721 (US)
(74) Representative: Schmidt, Christian

(57) **Abstract**

An example plasma confinement system includes an inner electrode having a rounded first end that is disposed on a longitudinal axis of the plasma confinement system and an outer electrode that at least partially surrounds the inner electrode. The outer electrode includes a solid conductive shell and an electrically conductive material disposed on the solid conductive shell and on the longitudinal axis of the plasma confinement system. The electrically conductive material has a melting point within a range of 170° C to 800° C at 1 atmosphere of pressure. Related plasma confinement systems and methods are also disclosed herein.

## Description

### CROSS-REFERENCE TO RELATED APPLICATION

This application claims the benefit of U.S. Provisional Patent Application No. 62/516,508, filed on June 7, 2017, the contents of which are incorporated herein by reference in their entirety.

### STATEMENT REGARDING FEDERALLY SPONSORED RESEARCH OR DEVELOPMENT

This invention was made with government support under Grant No. DEAR0000571, awarded by the Department of Energy (DOE). The government has certain rights in the invention.

### BACKGROUND

Unless otherwise indicated herein, the materials described in this section are not prior art to the claims in this application and are not admitted to be prior art by inclusion in this section.

Nuclear fusion is the process of combining two nuclei. When two nuclei of elements with atomic numbers less than that of iron are fused, energy is released. The release of energy is due to a slight difference in mass between the reactants and the products of the fusion reaction and is governed by ΔE = Δmc². The release of energy is also dependent upon the attractive strong nuclear force between the reactant nuclei overcoming the repulsive electrostatic force between the reactant nuclei.

The fusion reaction requiring the lowest plasma temperature occurs between deuterium (a hydrogen nucleus with one proton and one neutron) and tritium (a hydrogen nucleus having one proton and two neutrons). This reaction yields a helium-4 nucleus and a neutron.

One approach for achieving nuclear fusion is to energize a gas containing fusion reactants inside a reactor chamber. The energized gas becomes a plasma via ionization. To achieve conditions with sufficient temperatures and densities for fusion, the plasma needs to be confined.

### SUMMARY

A first aspect of the disclosure is a plasma confinement system that includes an inner electrode having a rounded first end that is disposed on a longitudinal axis of the plasma confinement system and an outer electrode that at least partially surrounds the inner electrode. The outer electrode includes a solid conductive shell and an electrically conductive material disposed on the solid conductive shell and on the longitudinal axis of the plasma confinement system. The electrically conductive material has a melting point within a range of 170° C to 800° C at 1 atmosphere of pressure.

A second aspect of the disclosure is a method for operating a plasma confinement system. The plasma confinement system includes an inner electrode having a rounded first end that is disposed on a longitudinal axis of the plasma confinement system and an outer electrode that at least partially surrounds the inner electrode. The method includes flowing gas into the plasma confinement system and applying, via a power supply, a voltage between the inner electrode and the outer electrode, thereby converting at least a portion of the gas into a Z-pinch plasma that flows between (i) an electrically conductive material disposed on a solid conductive shell of the outer electrode and on the longitudinal axis of the plasma confinement system and (ii) the rounded first end of the inner electrode. The electrically conductive material has a melting point within a range of 170° C to 800° C at 1 atmosphere of pressure. The method also includes moving a first liquid portion of the electrically conductive material out of the plasma confinement system. The first liquid portion of the electrically conductive material is heated via reaction products of the Z-pinch plasma.

A third aspect of the disclosure is a plasma confinement system that includes an inner electrode, an intermediate electrode that at least partially surrounds the inner electrode, and an outer electrode that at least partially surrounds the intermediate electrode. The outer electrode includes a solid conductive shell and an electrically conductive material disposed on the solid conductive shell. The electrically conductive material has a melting point within a range of 180° C to 800° C at 1 atmosphere of pressure.

A fourth aspect of the disclosure is a method for operating a plasma confinement system. The plasma confinement system includes an inner electrode, an intermediate electrode that at least partially surrounds the inner electrode, and an outer electrode that at least partially surrounds the intermediate electrode. The method includes flowing gas into an acceleration region between the inner electrode and the intermediate electrode and applying, via a first power supply, a voltage between the inner electrode and the intermediate electrode, thereby converting at least a portion of the gas into a plasma having a substantially annular cross section, the plasma flowing axially within the acceleration region toward a first end of the inner electrode and a first end of the outer electrode. The method also includes applying, via a second power supply, a voltage between the inner electrode and the outer electrode to establish a Z-pinch plasma that flows between (i) an electrically conductive material disposed on a solid conductive shell of the outer electrode and (ii) the first end of the inner electrode. The electrically conductive material has a melting point within a range of 180° C to 800° C at 1 atmosphere of pressure. The method also includes moving a first liquid portion of the electrically conductive material out of the plasma confinement system. The first liquid portion of the electrically conductive material is heated via reaction products of the Z-pinch plasma.

The present application is a divisional application of EP 18813105.6, the disclosure of which is herewith explicitly incorporated by reference into the present disclosure for all purposes.

In the following, a set of aspects is disclosed. The aspects are numbered to facilitate referencing the features of one aspect in other aspects. The aspects form part of the disclosure of the present application and could be made subject to independent and/or dependent claims irrespective of what currently is claimed in the application. We note, however, that the scope of protection is defined by the appended claims, where the following aspects do not constitute claims. The aspects are:
1. A plasma confinement system comprising:
   an inner electrode having a rounded first end that is disposed on a longitudinal axis of the plasma confinement system; and
   an outer electrode that at least partially surrounds the inner electrode, the outer electrode comprising:
      a solid conductive shell; and
      an electrically conductive material disposed on the solid conductive shell and on the longitudinal axis of the plasma confinement system, wherein the electrically conductive material has a melting point within a range of 170° C to 800° C at 1 atmosphere of pressure.
2. The plasma confinement system of aspect 1, wherein the electrically conductive material has a melting point within a range of 180° C to 550° C.
3. The plasma confinement system of any of aspects 1-2, further comprising a feeding mechanism that is configured to move the inner electrode along the longitudinal axis.
4. The plasma confinement system of any of aspects 1-3, further comprising a cooling system that is configured to cool the inner electrode during operation of the plasma confinement system.
5. The plasma confinement system of any of aspects 1-4, further comprising one or more gas ports configured to direct gas into an acceleration region radially between the inner electrode and the outer electrode.
6. The plasma confinement system of any of aspects 1-5, further comprising a power supply configured to apply a voltage between the inner electrode and the outer electrode.
7. The plasma confinement system of any of aspects 5-6, wherein the acceleration region has a substantially annular cross section.
8. The plasma confinement system of any of aspects 1-7, wherein the inner electrode comprises a substantially cylindrical body.
9. The plasma confinement system of any of aspects 1-8, the outer electrode comprising a first end and an opposing second end, wherein the rounded first end of the inner electrode is between the first end of the outer electrode and the second end of the outer electrode.
10. The plasma confinement system of aspect 9, further comprising an assembly region within the outer electrode between the rounded first end of the inner electrode and the first end of the outer electrode.
11. The plasma confinement system of any of aspects 1-10, the inner electrode comprising a second end opposite the rounded first end of the inner electrode, wherein the second end of the inner electrode is substantially disc-shaped.
12. The plasma confinement system of any of aspects 1-11, wherein the outer electrode comprises a substantially cylindrical body.
13. The plasma confinement system of any of aspects 9-12, wherein the first end of the outer electrode is substantially disc-shaped.
14. The plasma confinement system of any of aspects 9-13, wherein the second end of the outer electrode is substantially annular.
15. The plasma confinement system of any of aspects 5-14, wherein the one or more gas ports are positioned axially between the rounded first end of the inner electrode and the second end of the inner electrode.
16. The plasma confinement system of any of aspects 1-15, further comprising:
   a gas source; and
   one or more regulators configured to control gas flow from the gas source through the respective one or more first gas ports.
17. The plasma confinement system of aspect 16, wherein the gas source contains one or more of tritium, deuterium, helium-3, hydrogen, boron, or borane.
18. The plasma confinement system of any of aspects 1-17, further comprising a vacuum chamber that at least partially surrounds the inner electrode and the outer electrode.
19. The plasma confinement system of any of aspects 1-18, wherein the electrically conductive material comprises one or more of lithium, lead, or tin.
20. The plasma confinement system of aspect 19, wherein the electrically conductive material comprises a eutectic of one or more of lithium, lead, or tin.
21. The plasma confinement system of any of aspects 1-20, wherein the plasma confinement system is configured to maintain a Z-pinch plasma between the rounded first end of the inner electrode and the electrically conductive material disposed on the longitudinal axis of the plasma confinement system.
22. The plasma confinement system of aspect 21, wherein the Z-pinch plasma has axial flow that varies in the radial direction.
23. The plasma confinement system of any of aspects 1-22, wherein the solid conductive shell comprises:
   a solid conductive outer shell; and
   a solid inner shell that is disposed within the solid conductive outer shell and in contact with the solid conductive outer shell.
24. The plasma confinement system of aspect 23, wherein the solid inner shell comprises:
   an axial wall that at least partially encircles the longitudinal axis of the plasma confinement system; and
   a radial wall that couples the axial wall to the solid conductive outer shell.
25. The plasma confinement system of aspect 24, wherein the radial wall and the first end of the outer electrode form a pool region, the plasma confinement system further comprising:
   a heat exchanger; and
   a first port configured to guide the electrically conductive material from the heat exchanger into the pool region.
26. The plasma confinement system of aspect 25, the plasma confinement system further comprising a second port configured to guide the electrically conductive material from the pool region to the heat exchanger.
27. The plasma confinement system of any of aspects 1-26, further comprising a pumping system configured to circulate the electrically conductive material over the outer electrode when the electrically conductive material is in a liquid state.
28. The plasma confinement system of aspect 27, wherein the pumping system is configured to circulate the electrically conductive material such that movement of the electrically conductive material includes one or more of an azimuthal component or an axial component with respect to the longitudinal axis of the plasma confinement system.
29. The plasma confinement system of any of aspects 24-26, the axial wall comprising an end that faces the second end of the outer electrode, the plasma confinement system further comprising:
   a first pump configured to move the electrically conductive material from the pool region to a region that is outside the axial wall and separated from the pool region by the radial wall.
30. The plasma confinement system of aspect 29, the first pump being further configured to move the electrically conductive material over the end of the axial wall to a region inside the axial wall.
31. The plasma confinement system of any of aspects 29-30, the plasma confinement system further comprising:
   a second pump configured to move the electrically conductive material from the pool region to the region that is outside the axial wall and separated from the pool region by the radial wall.
32. The plasma confinement system of any of aspects 1-31, the first end of the inner electrode being formed of graphite or carbon fiber.
33. The plasma confinement system of any of aspects 1-32, the inner electrode having a coating comprising an electrically conductive material having a melting point within a range of 180° C to 800° C at 1 atmosphere of pressure.
34. A method for operating a plasma confinement system that comprises an inner electrode having a rounded first end that is disposed on a longitudinal axis of the plasma confinement system and an outer electrode that at least partially surrounds the inner electrode, the method comprising:
   flowing gas into the plasma confinement system;
   applying, via a power supply, a voltage between the inner electrode and the outer electrode, thereby converting at least a portion of the gas into a Z-pinch plasma that flows between (i) an electrically conductive material disposed on a solid conductive shell of the outer electrode and on the longitudinal axis of the plasma confinement system and (ii) the rounded first end of the inner electrode, wherein the electrically conductive material has a melting point within a range of 170° C to 800° C at 1 atmosphere of pressure; and
   moving a first liquid portion of the electrically conductive material out of the plasma confinement system, wherein the first liquid portion of the electrically conductive material is heated via reaction products of the Z-pinch plasma.
35. The method of aspect 34, wherein the electrically conductive material has a melting point within a range of 180° C to 550 ° C.
36. The method of any of aspects 34-35, further comprising operating a feeding mechanism to move the inner electrode along the longitudinal axis.
37. The method of any of aspects 34-36, further comprising operating a cooling system to cool the inner electrode during operation of the plasma confinement system.
38. The method of aspect 34, wherein the gas comprises one or more of tritium, deuterium, helium-3, hydrogen, boron, or borane.
39. The method of any of aspects 34-38, wherein the electrically conductive material comprises one or more of lithium, lead, or tin.
40. The method of any of aspects 34-39, wherein the electrically conductive material comprises a eutectic of one or more of lithium, lead, or tin.
41. The method of any of aspects 34-40, wherein the solid conductive shell comprises:
   a solid conductive outer shell; and
   a solid inner shell that is disposed within the solid conductive outer shell and in contact with the solid conductive outer shell.
42. The method of aspect 41, wherein the solid inner shell comprises:
   an axial wall that at least partially encircles the longitudinal axis of the plasma confinement system; and
   a radial wall that couples the axial wall to the solid conductive outer shell.
43. The method of aspect 42, wherein the radial wall and a first end of the outer electrode form a pool region, the method further comprising:
   moving, via a first port of the plasma confinement system, a second liquid portion of the electrically conductive material from a heat exchanger into the pool region.
44. The method of aspect 43, wherein moving the first liquid portion of the electrically conductive material out of the plasma confinement system comprises:
   moving, via a second port of the plasma confinement system, the first liquid portion of the electrically conductive material from the pool region to the heat exchanger.
45. The method of any of aspects 34-44, further comprising moving the electrically conductive material over the outer electrode, wherein the electrically conductive material moved over the outer electrode is in a liquid state.
46. The method of aspect 45, wherein moving the electrically conductive material over the outer electrode comprises moving the electrically conductive material such that the movement of the electrically conductive material includes one or more of an azimuthal component or an axial component with respect to the longitudinal axis of the plasma confinement system.
47. The method of any of aspects 42-46, the axial wall comprising an end that faces a second end of the outer electrode, the method further comprising:
   moving, via a first pump, the electrically conductive material from the pool region to a region that is outside the axial wall and separated from the pool region by the radial wall.
48. The method of aspect 47, further comprising moving the electrically conductive material over the end of the axial wall to a region inside the axial wall.
49. The method of any of aspects 34-48, further comprising:
   moving, via a second pump, the electrically conductive material from the pool region to the region that is outside the axial wall and separated from the pool region by the radial wall.
50. The method of any of aspects 34-49, the first end of the inner electrode being formed of graphite or carbon fiber.
51. The method of any of aspects 34-50, the inner electrode having a coating comprising an electrically conductive material having a melting point within a range of 180° C to 800° C at 1 atmosphere of pressure.
52. The method of aspect 51, wherein flowing the gas comprises flowing the gas through one or more gas ports into an acceleration region radially between the inner electrode and the outer electrode.
53. The method of any of aspects 34-52, wherein the inner electrode comprises a substantially cylindrical body.
54. The method of any of aspects 34-53, the rounded first end of the inner electrode being between a first end of the outer electrode and a second opposing end of the outer electrode.
55. The method of any of aspects 34-54, wherein the first end of the outer electrode is substantially disc-shaped.
56. The method of any of aspects 34-55, wherein the Z-pinch plasma flows in an assembly region within the outer electrode between the rounded first end of the inner electrode and the first end of the outer electrode.
57. The method of any of aspects 34-56, wherein the outer electrode comprises a substantially cylindrical body.
58. The method of any of aspects 52-57, wherein the one or more first gas ports are positioned axially between the first end of the inner electrode and the second end of the inner electrode.
59. The method of any of aspects 34-58, wherein flowing the gas results in a gas pressure adjacent to the one or more first gas ports within a range of 1000 to 5800 Torr prior to the voltage between the inner electrode and the outer electrode being applied via the power supply.
60. The method of aspect 59, wherein the gas pressure adjacent to the one or more first gas ports is within a range of 5450 to 5550 Torr.
61. The method of any of aspects 52-60, wherein a gas pressure within the acceleration region prior to the voltage between the inner electrode and the outer electrode being applied via the power supply is within a range of 1000 to 5800 Torr.
62. The method of aspect 61, wherein the gas pressure within the acceleration region is within a range of 5450 to 5550 Torr.
63. The method of any of aspects 34-62, wherein the voltage applied between the inner electrode and the outer electrode is within a range of 2 kV to 30 kV.
64. The method of any of aspects 34-63, wherein the voltage applied between the inner electrode and the outer electrode results in a radial electric field within a range of 30 kV/m to 500 kV/m.
65. The method of any of aspects 34-64, wherein the Z-pinch plasma has a radius between 0.1 mm and 5 mm.
66. The method of any of aspects 34-65, wherein the Z-pinch plasma has an ion temperature between 900 and 50,000 eV and an electron temperature greater than 500 eV.
67. The method of any of aspects 34-60, wherein the Z-pinch plasma has an ion number density greater than 1×10²³ ions/m³ or an electron number density of greater than 1×10²³ electrons/m³.
68. The method of any of aspects 34-67, wherein the Z-pinch plasma exhibits sheared flow.
69. The method of any of aspects 34-68, wherein the Z-pinch plasma exhibits a magnetic field of over 8 T.
70. The method of any of aspects 34-69, wherein the Z-pinch plasma exhibits stability for at least 10 µs.
71. The method of any of aspects 34-70, wherein the reaction products of the Z-pinch plasma comprise neutrons.
72. The method of any of aspects 34-71, further comprising consuming the reaction products and a portion of the electrically conductive material to generate tritium.
73. The method of aspect 72, further comprising recovering the generated tritium from the electrically conductive material.
74. The method of any of aspects 34-73, further comprising capturing vapors within the plasma confinement system via the electrically conductive material.
75. The method of any of aspects 43-74, further comprising controlling a thickness of the electrically conductive material on the solid conductive shell by adjusting a rate at which the electrically conductive material moves into the pool region from the heat exchanger or adjusting a rate at which the electrically conductive material moves to the heat exchanger from the pool region.
76. A plasma confinement system comprising:
   an inner electrode;
   an intermediate electrode that at least partially surrounds the inner electrode; and
   an outer electrode that at least partially surrounds the intermediate electrode, the outer electrode comprising:
      a solid conductive shell; and
      an electrically conductive material disposed on the solid conductive shell,
   wherein the electrically conductive material has a melting point within a range of 180° C to 800° C at 1 atmosphere of pressure.
77. The plasma confinement system of aspect 76, wherein the electrically conductive material has a melting point within a range of 180° C to 550° C.
78. The plasma confinement system of any of aspects 76-77, further comprising a feeding mechanism that is configured to move the inner electrode along the longitudinal axis.
79. The plasma confinement system of any of aspects 76-78, further comprising a cooling system that is configured to cool the inner electrode during operation of the plasma confinement system.
80. The plasma confinement system of aspect 76, further comprising one or more gas ports configured to direct gas into an acceleration region between the inner electrode and the intermediate electrode.
81. The plasma confinement system of any of aspects 76-80, the inner electrode having a first end that is at least partially surrounded by the outer electrode.
82. The plasma confinement system of aspect 81, wherein the first end of the inner electrode is rounded.
83. The plasma confinement system of any of aspects 76-82, wherein the electrically conductive material is disposed on a longitudinal axis of the plasma confinement system.
84. The plasma confinement system of any of aspects 76-83, further comprising:
   a first power supply configured to apply a voltage between the inner electrode and the intermediate electrode; and
   a second power supply configured to apply a voltage between the inner electrode and the outer electrode.
85. The plasma confinement system of aspect 84, wherein the acceleration region has a substantially annular cross section.
86. The plasma confinement system of any of aspects 76-85, wherein the inner electrode comprises a substantially cylindrical body.
87. The plasma confinement system of any of aspects 76-77, wherein the outer electrode comprises a first end and an opposing second end.
88. The plasma confinement system of aspect 87, wherein the first end of the inner electrode is between the first end of the outer electrode and the second end of the outer electrode and the inner electrode further comprises a second end opposite the first end of the inner electrode.
89. The plasma confinement system of any of aspects 87-88, wherein the intermediate electrode comprises (a) a first end between the first end of the outer electrode and the second end of the outer electrode and (b) an opposing second end.
90. The plasma confinement system of any of aspects 76-89, wherein the first end of the intermediate electrode is substantially annular.
91. The plasma confinement system of any of aspects 76-90, further comprising an assembly region within the outer electrode between the first end of the inner electrode and the first end of the outer electrode.
92. The plasma confinement system of any of aspects 88-90, wherein the second end of the inner electrode is substantially disc-shaped.
93. The plasma confinement system of any of aspects 89-92, wherein the second end of the intermediate electrode is substantially annular.
94. The plasma confinement system of any of aspects 76-93, wherein the outer electrode comprises a substantially cylindrical body.
95. The plasma confinement system of any of aspects 76-85, wherein the intermediate electrode comprises a substantially cylindrical body.
96. The plasma confinement system of any of aspects 87-95, wherein the first end of the outer electrode is substantially disc-shaped.
97. The plasma confinement system of any of aspects 87-96, wherein the second end of the outer electrode is substantially annular.
98. The plasma confinement system of any of aspects 80-97, wherein the one or more gas ports are positioned axially between the first end of the inner electrode and the second end of the inner electrode.
99. The plasma confinement system of any of aspects 76-98, further comprising:
   a gas source; and
   one or more regulators configured to control gas flow from the gas source through the respective one or more gas ports.
100. The plasma confinement system of aspect 99, wherein the gas source contains one or more of tritium, deuterium, helium-3, hydrogen, boron, or borane.
101. The plasma confinement system of any of aspects 76-100, further comprising an insulator between the second end of the outer electrode and the intermediate electrode.
102. The plasma confinement system of aspect 101, wherein the insulator has an annular cross section.
103. The plasma confinement system of any of aspects 89-102, further comprising a second insulator between the second end of the intermediate electrode and the inner electrode.
104. The plasma confinement system of aspect 103, wherein the second insulator has an annular cross section.
105. The plasma confinement system of any of aspects 76-104, further comprising a vacuum chamber that at least partially surrounds the inner electrode, the intermediate electrode, and the outer electrode.
106. The plasma confinement system of any of aspects 76-105, wherein the electrically conductive material comprises one or more of lithium, lead, or tin.
107. The plasma confinement system of aspect 106, wherein the electrically conductive material comprises a eutectic of one or more of lithium, lead, or tin.
108. The plasma confinement system of any of aspects 81-107, wherein the plasma confinement system is configured to maintain a Z-pinch plasma between the first end of the inner electrode and the electrically conductive material.
109. The plasma confinement system of aspect 108, wherein the plasma confinement system is configured to maintain the Z-pinch plasma between the first end of the inner electrode and the electrically conductive material on a longitudinal axis of the plasma confinement system.
110. The plasma confinement system of aspect 109, wherein the Z-pinch plasma has axial flow that varies in the radial direction.
111. The plasma confinement system of any of aspects 76-110, wherein the solid conductive shell comprises:
   a solid conductive outer shell; and
   a solid inner shell that is disposed within the solid conductive outer shell and in contact with the solid conductive outer shell.
112. The plasma confinement system of aspect 111, wherein the solid inner shell comprises:
   an axial wall that at least partially encircles the longitudinal axis of the plasma confinement system; and
   a radial wall that couples the axial wall to the solid conductive outer shell.
113. The plasma confinement system of aspect 112, wherein the radial wall and the first end of the outer electrode form a pool region, the plasma confinement system further comprising:
   a heat exchanger; and
   a first port configured to guide the electrically conductive material from the heat exchanger into the pool region.
114. The plasma confinement system of aspect 113, the plasma confinement system further comprising a second port configured to guide the electrically conductive material from the pool region to the heat exchanger.
115. The plasma confinement system of any of aspects 76-114, further comprising a pumping system configured to circulate the electrically conductive material over the outer electrode when the electrically conductive material is in a liquid state.
116. The plasma confinement system of aspect 115, wherein the pumping system is configured to circulate the electrically conductive material such that movement of the electrically conductive material includes one or more of an azimuthal component or an axial component with respect to the longitudinal axis of the plasma confinement system.
117. The plasma confinement system of any of aspects 76-116, the axial wall comprising an end that faces the second end of the outer electrode, the plasma confinement system further comprising:
   a first pump configured to move the electrically conductive material from the pool region to a region that is outside the axial wall and separated from the pool region by the radial wall.
118. The plasma confinement system of aspect 117, the first pump being further configured to move the electrically conductive material over the end of the axial wall to a region inside the axial wall.
119. The plasma confinement system of any of aspects 117-118, the plasma confinement system further comprising:
   a second pump configured to move the electrically conductive material from the pool region to the region that is outside the axial wall and separated from the pool region by the radial wall.
120. The plasma confinement system of any of aspects 76-119, the first end of the inner electrode being formed of graphite or carbon fiber.
121. The plasma confinement system of any of aspects 76-120, the inner electrode having a coating comprising an electrically conductive material having a melting point within a range of 180° C to 800° C at 1 atmosphere of pressure.
122. A method for operating a plasma confinement system that comprises an inner electrode, an intermediate electrode that at least partially surrounds the inner electrode, and an outer electrode that at least partially surrounds the intermediate electrode, the method comprising:
   flowing gas into an acceleration region between the inner electrode and the intermediate electrode;
   applying, via a first power supply, a voltage between the inner electrode and the intermediate electrode, thereby converting at least a portion of the gas into a plasma having a substantially annular cross section, the plasma flowing axially within the acceleration region toward a first end of the inner electrode and a first end of the outer electrode;
   applying, via a second power supply, a voltage between the inner electrode and the outer electrode to establish a Z-pinch plasma that flows between (i) an electrically conductive material disposed on a solid conductive shell of the outer electrode and (ii) the first end of the inner electrode, wherein the electrically conductive material has a melting point within a range of 180° C to 800° C at 1 atmosphere of pressure; and
   moving a first liquid portion of the electrically conductive material out of the plasma confinement system, wherein the first liquid portion of the electrically conductive material is heated via reaction products of the Z-pinch plasma.
123. The method of aspect 122, wherein the electrically conductive material has a melting point within a range of 180° C to 550 ° C.
124. The method of any of aspects 122-123, further comprising a feeding mechanism that is configured to move the inner electrode along the longitudinal axis.
125. The method of any of aspects 122-124, further comprising a cooling system that is configured to cool the inner electrode during operation of the plasma confinement system.
126. The method of aspect 122, wherein the first end of the inner electrode is rounded.
127. The method of any of aspects 122-126, wherein at least a portion of the electrically conductive material is disposed on a longitudinal axis of the plasma confinement system.
128. The method of any of aspects 122-127, wherein the acceleration region has a substantially annular cross section.
129. The method of any of aspects 122-128, wherein the inner electrode comprises a substantially cylindrical body.
130. The method of any of aspects 122-129, wherein the outer electrode comprises a second end that is opposite the first end of the outer electrode.
131. The method of aspect 130, wherein the inner electrode comprises a second end that is opposite the first end of the inner electrode.
132. The method of any of aspects 130-131, wherein the intermediate electrode comprises (a) a first end between the first end of the outer electrode and the second end of the outer electrode and (b) an opposing second end.
133. The method of any of aspects 122-132, wherein the Z-pinch plasma flows in an assembly region within the outer electrode between the first end of the inner electrode and the first end of the outer electrode.
134. The method of any of aspects 132-133, wherein the first end of the intermediate electrode is substantially annular.
135. The method of any of aspects 131-134, wherein the second end of the inner electrode is substantially disc-shaped.
136. The method of any of aspects 132-135, wherein the second end of the intermediate electrode is substantially annular.
137. The method of any of aspects 122-136, wherein the outer electrode comprises a substantially cylindrical body.
138. The method of any of aspects 122-137, wherein the intermediate electrode comprises a substantially cylindrical body.
139. The method of any of aspects 122-138, wherein the first end of the outer electrode is substantially disc-shaped.
140. The method of any of aspects 130-139, wherein the second end of the outer electrode is substantially annular.
141. The method of any of aspects 122-140, wherein flowing the gas into the acceleration region comprises flowing the gas through one or more first gas ports that are positioned axially between the first end of the inner electrode and the second end of the inner electrode.
142. The method of any of aspects 122-141, wherein flowing the gas into the acceleration region results in a gas pressure adjacent to the one or more first gas ports within a range of 1000 to 5800 Torr prior to the voltage between the inner electrode and the intermediate electrode being applied via the first power supply.
143. The method of aspect 142, wherein the gas pressure adjacent to the one or more first gas ports is within a range of 5450 to 5550 Torr.
144. The method of any of aspects 122-143, wherein a gas pressure within the acceleration region prior to the voltage between the inner electrode and the intermediate electrode being applied via the first power supply is within a range of 1000 to 5800 Torr.
145. The method of aspect 144, wherein the gas pressure within the acceleration region is within a range of 5450 to 5550 Torr.
146. The method of any of aspects 122-145, wherein the voltage applied between the inner electrode and the intermediate electrode is within a range of 2 kV to 30 kV.
147. The method of any of aspects 122-146, wherein the voltage applied between the inner electrode and the intermediate electrode results in a radial electric field within a range of 30 kV/m to 500 kV/m.
148. The method of any of aspects 122-147, wherein the voltage applied between the inner electrode and the outer electrode is within a range of 2 kV to 30 kV.
149. The method of any of aspects 122-148, wherein the voltage applied between the inner electrode and the outer electrode results in a radial electric field within a range of 30 kV/m to 500 kV/m.
150. The method of any of aspects 122-149, wherein the Z-pinch plasma has a radius between 0.1 mm and 5 mm.
151. The method of any of aspects 122-150, wherein the Z-pinch plasma has an ion temperature between 900 and 50,000 eV and an electron temperature greater than 500 eV.
152. The method of any of aspects 122-151, wherein the Z-pinch plasma has an ion number density greater than 1×10²³ ions/m³ or an electron number density of greater than 1×10²³ electrons/m³.
153. The method of any of aspects 122-152, wherein the Z-pinch plasma exhibits sheared flow.
154. The method of any of aspects 122-153, wherein the Z-pinch plasma exhibits a magnetic field of over 8 T.
155. The method of any of aspects 122-154, wherein the Z-pinch plasma exhibits stability for at least 10 µs.
156. The method of any of aspects 122-143, wherein the gas comprises one or more of tritium, deuterium, helium-3, hydrogen, boron, or borane.
157. The method of any of aspects 122-156, wherein the electrically conductive material comprises one or more of lithium, lead, or tin.
158. The method of any of aspects 122-157, wherein the electrically conductive material comprises a eutectic of one or more of lithium, lead, or tin.
159. The method of any of aspects 122-158, wherein the solid conductive shell comprises:
   a solid conductive outer shell; and
   a solid inner shell that is disposed within the solid conductive outer shell and in contact with the solid conductive outer shell.
160. The method of aspect 159, wherein the solid inner shell comprises:
   an axial wall that at least partially encircles the longitudinal axis of the plasma confinement system; and
   a radial wall that couples the axial wall to the solid conductive outer shell.
161. The method of aspect 160, wherein the radial wall and a first end of the outer electrode form a pool region, the method further comprising:
   moving, via a first port of the plasma confinement system, a second liquid portion of the electrically conductive material from a heat exchanger into the pool region.
162. The method of aspect 161, wherein moving the first liquid portion of the electrically conductive material out of the plasma confinement system comprises:
   moving, via a second port of the plasma confinement system, the first liquid portion of the electrically conductive material from the pool region to the heat exchanger.
163. The method of any of aspects 122-162, further comprising moving the electrically conductive material over the outer electrode, wherein the electrically conductive material moved over the outer electrode is in a liquid state.
164. The method of aspect 163, wherein moving the electrically conductive material over the outer electrode comprises moving the electrically conductive material such that the movement of the electrically conductive material includes one or more of an azimuthal component or an axial component with respect to the longitudinal axis of the plasma confinement system.
165. The method of any of aspects 160-164, the axial wall comprising an end that faces a second end of the outer electrode, the method further comprising:
   moving, via a first pump, the electrically conductive material from the pool region to a region that is outside the axial wall and separated from the pool region by the radial wall.
166. The method of aspect 165, further comprising moving the electrically conductive material over the end of the axial wall to a region inside the axial wall.
167. The method of any of aspects 122-166, further comprising:
   moving, via a second pump, the electrically conductive material from the pool region to the region that is outside the axial wall and separated from the pool region by the radial wall.
168. The method of any of aspects 122-167, the first end of the inner electrode being formed of graphite or carbon fiber.
169. The method of any of aspects 122-156, the inner electrode having a coating comprising an electrically conductive material having a melting point within a range of 180° C to 800° C at 1 atmosphere of pressure.
170. The method of any of aspects 122-169, wherein the reaction products of the Z-pinch plasma comprise neutrons.
171. The method of any of aspects 122-170, further comprising consuming the reaction products and a portion of the electrically conductive material to generate tritium.
172. The method of aspect 171, further comprising recovering the generated tritium from the electrically conductive material.
173. The method of any of aspects 122-172, further comprising capturing vapors within the plasma confinement system via the electrically conductive material.
174. The method of any of aspects 122-173, further comprising controlling a thickness of the electrically conductive material on the solid conductive shell by adjusting a rate at which the electrically conductive material moves into the pool region from the heat exchanger or adjusting a rate at which the electrically conductive material moves to the heat exchanger from the pool region.

When the term "substantially" or "about" is used herein, it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide. In some examples disclosed herein, "substantially" or "about" means within +/- 5% of the recited value.

These, as well as other aspects, advantages, and alternatives will become apparent to those of ordinary skill in the art by reading the following detailed description, with reference where appropriate to the accompanying drawings. Further, it should be understood that this summary and other descriptions and figures provided herein are intended to illustrate the invention by way of example only and, as such, that numerous variations are possible.

### BRIEF DESCRIPTION OF THE DRAWINGS

Figure 1 is a schematic cross-sectional diagram of a plasma confinement system, according to an example embodiment.
Figure 2 is a schematic cross-sectional diagram of a plasma confinement system, according to an example embodiment.
Figure 3 is a block diagram of a method for operating a plasma confinement system, according to an example embodiment.
Figure 4 illustrates some aspects of a plasma confinement system and a method for operation, according to an example embodiment.
Figure 5 illustrates some aspects of a plasma confinement system and a method for operation, according to an example embodiment.
Figure 6 illustrates some aspects of a plasma confinement system and a method for operation, according to an example embodiment.
Figure 7 illustrates some aspects of a plasma confinement system and a method for operation, according to an example embodiment.
Figure 8 illustrates some aspects of a plasma confinement system and a method for operation, according to an example embodiment.
Figure 9 illustrates some aspects of a plasma confinement system and a method for operation, according to an example embodiment.
Figure 10 is a block diagram of a method for operating a plasma confinement system, according to an example embodiment.
Figure 11 illustrates some aspects of a plasma confinement system and a method for operation, according to an example embodiment.
Figure 12 illustrates some aspects of a plasma confinement system and a method for operation, according to an example embodiment.
Figure 13 illustrates some aspects of a plasma confinement system and a method for operation, according to an example embodiment.
Figure 14 illustrates some aspects of a plasma confinement system and a method for operation, according to an example embodiment.
Figure 15 illustrates some aspects of a plasma confinement system and a method for operation, according to an example embodiment.
Figure 16 illustrates some aspects of a plasma confinement system and a method for operation, according to an example embodiment.

### DETAILED DESCRIPTION

Various embodiments of plasma confinement systems and methods for their use are disclosed herein. The disclosed embodiments, when compared to existing systems and methods, may facilitate increased plasma stability, more robust sheared plasma flow, smaller Z-pinch plasma radii, higher magnetic fields, and/or higher plasma temperature. Some of the disclosed embodiments exhibit independent control of plasma acceleration and plasma compression as well.

An additional feature of some of the disclosed embodiments includes one or more electrodes with a liquid electrode material disposed thereon (*e.g*., disposed on a longitudinal axis of the plasma confinement system). The liquid electrode material can absorb and transfer heat from the plasma discharge, provide neutron shielding, breed additional tritium, provide additional vacuum pumping, and provide a tritium recovery medium. Use of the liquid electrode material can help mitigate problems such as the damage of (solid) electrodes caused by the heat of the plasma discharge. The liquid electrode material can also be circulated within the vacuum chamber (*e.g*., over a weir wall) such that the liquid electrode material has an azimuthal and/or axial component to its flow within the vacuum chamber.

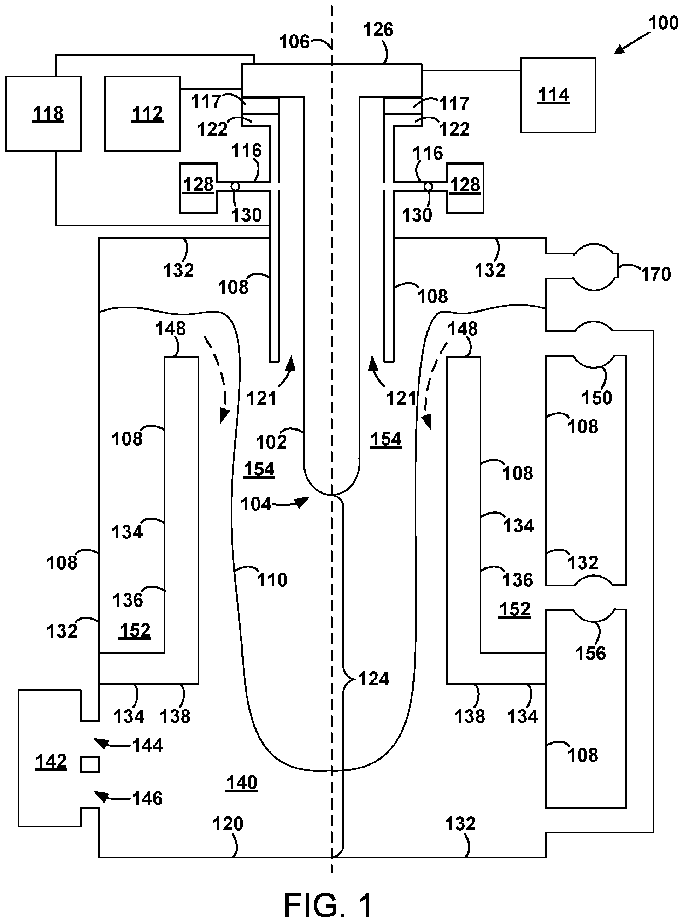

Figure 1 is a schematic cross-sectional diagram of a plasma confinement system 100. The plasma confinement system 100 includes an inner electrode 102 having a rounded first end 104 that is disposed on a longitudinal axis 106 (*e.g*., an axis of cylindrical symmetry) of the plasma confinement system 100. The plasma confinement system 100 also includes an outer electrode that at least partially surrounds the inner electrode 102. The outer electrode includes a solid conductive shell 108 and an electrically conductive material 110 disposed on the solid conductive shell 108 and on the longitudinal axis 106 of the plasma confinement system 100. The electrically conductive material 110 has a melting point within a range of 170° C to 800° C (*e.g*., 180° C to 550° C) at 1 atmosphere of pressure. In various examples, the electrically conductive material 110 can the take the form of eutectics, alloys, or mixtures of one or more of lithium, lead, or tin.

The inner electrode 102 generally takes the form of an electrically conducting shell (*e.g*., formed of one or more of stainless steel, molybdenum, tungsten, or copper) having a substantially cylindrical body. The inner electrode 102 includes a first end 104 (*e.g*. a rounded end) and an opposing second end 126 (*e.g.,* a substantially disc-shaped end). The first end 104 could be formed of a carbon-based material such as graphite or carbon fiber, or one or more of stainless steel, molybdenum, tungsten, or copper, for example. In some embodiments, the inner electrode 102 has a coating on its outer surface that includes an electrically conductive material having a melting point within a range of 180° C to 800° C (*e.g.,* 180° C to 550° C) at 1 atmosphere of pressure. In various examples, the electrically conductive material can the take the form of eutectics, alloys, or mixtures of one or more of lithium, lead, or tin. Alternatively, the electrically conductive material can the take the form of elemental lithium, lead, or tin.

The plasma confinement system 100 further includes a feeding mechanism 112 (*e.g.,* an electromechanical system) that is configured to move the inner electrode 102 in or out of the plasma confinement system 100 along the longitudinal axis 106. During operation, the inner electrode 102 may become eroded by plasma discharge and the feeding mechanism 112 can be operated to feed in the inner electrode 102 to maintain the relative spacing between the inner electrode 102 and other components of the plasma confinement system 100.

The plasma confinement system 100 further includes a cooling system 114 (*e.g.,* a heat exchanger) that is configured to cool the inner electrode 102 during operation of the plasma confinement system 100.

The outer electrode generally takes the form of an electrically conducting (*e.g*., stainless steel) shell having a substantially cylindrical body. The solid conductive shell 108 of the outer electrode includes a solid conductive outer shell 132 and a solid inner shell 134 (*e.g.,* formed of electrically conductive material or high-resistivity material such as silicon carbide) that is disposed within the solid conductive outer shell 132 and in contact with the solid conductive outer shell 132. More specifically, the solid inner shell 134 includes an axial wall 136 that at least partially encircles the longitudinal axis 106 of the plasma confinement system 100 (*e.g*., partially encircles the inner electrode 102) and a radial wall 138 that couples the axial wall 136 to the solid conductive outer shell 132.

The outer electrode includes a first end 120 and an opposing second end 122. The rounded first end 104 of the inner electrode 102 is between the first end 120 (*e.g.,* a substantially disc-shaped end) of the outer electrode and the second end 122 (*e.g.,* a substantially annular end) of the outer electrode. The radial wall 138 and a first end 120 of the outer electrode form a pool region 140 within the plasma confinement chamber 100. The pool region 140 serves as a reservoir for a substantial amount of the (*e.g.,* liquid) electrically conductive material 110 that is in the plasma confinement chamber 100. As shown, the electrically conductive material 110 can also be circulated over the end 148 of the axial wall 136 by a pump 150 and/or a pump 156 as is discussed in more detail below.

The outer electrode (i.e., the solid conductive shell 108 and the electrically conductive material 110) surrounds much of the inner electrode 102. The inner electrode 102 and the outer electrode may be concentric and have radial symmetry with respect to the longitudinal axis 106.

The plasma confinement system 100 also includes a heat exchanger 142, a first port 144 configured to guide the electrically conductive material 110 from the heat exchanger 142 into the pool region 140, and a second port 146 configured to guide the electrically conductive material 110 from the pool region 140 to the heat exchanger 142. The heat exchanger 142 is configured to receive, via the second port 146, the electrically conductive material 110 that is heated within the plasma confinement system 100, extract heat from the electrically conductive material 110, and move (*e.g*., pump) the electrically conductive material 110 back into the pool region 140 via the first port 144 to be heated again by fusion reactions that take place in the plasma confinement system 100. In Figure 1, the first port 144 is shown above the second port 146, however, in other examples the second port 146 could be above the first port 144. One of skill in the art will recognize that, in various examples, the ports 144 and 146 can have various relative positions.

As noted above, the axial wall 136 includes an end 148 that faces the second end 122 of the outer electrode. The plasma confinement system 100 also includes a first pump 150 configured to move the electrically conductive material 110 from the pool region 140 to a region 152 that is outside the axial wall 136 and separated from the pool region 140 by the radial wall 138. The first pump 150 is configured to move the electrically conductive material 110 over the end 148 of the axial wall 136 to a region 154 inside the axial wall 136.

The plasma confinement system 100 also includes a second pump 156 configured to move the electrically conductive material 110 from the pool region 140 to the region 152 that is outside the axial wall 136 and separated from the pool region 140 by the radial wall 138.

The plasma confinement system 100 also includes a pump 170 (*e.g*., a turbo-molecular pump) configured to pump air out of the plasma confinement system 100 such that the base pressure within the plasma confinement system 100 is within the range of 10⁻⁵ to 10⁻⁸ Torr.

The plasma confinement system 100 also includes one or more gas ports 116 configured to direct gas (*e.g*., tritium, deuterium, helium-3, hydrogen, a boron containing gas, or borane) from a gas source 128 (*e.g*., a pressurized gas tank) into an acceleration region 121 that is radially between the inner electrode 102 and the outer electrode. The acceleration region 121 has a substantially annular cross section defined by the shapes of the inner electrode 102 and the solid conductive shell 108. As shown in Figure 1, the one or more gas ports 116 are positioned axially between the first end 104 of the inner electrode 102 and the second end 126 of the inner electrode 102.

The plasma confinement system 100 also includes a power supply 118 configured to apply a voltage between the inner electrode 102 and the outer electrode (*e.g*., the solid conductive shell 108). The power supply 118 will generally take the form of a capacitor bank capable of storing up to 500 kJ or up to 3-4 MJ, for example. A positive terminal of the power supply 118 can be coupled to the inner electrode 102 or alternatively to the outer electrode (*e.g*., the solid conductive shell 108).

The plasma confinement system 100 includes an assembly region 124 within the outer electrode between the first end 104 of the inner electrode 102 and the first end 120 of the outer electrode. The plasma confinement system 100 is configured to sustain a Z-pinch plasma within the assembly region 124 as described below.

The plasma confinement system 100 also includes an insulator 117 between the second end 122 of the outer electrode (*e.g*., the solid conductive shell 108) and the inner electrode 102 to maintain electrical isolation between the inner electrode 102 and the outer electrode. The insulator 117 (*e.g*., a ceramic material) generally has an annular cross section.

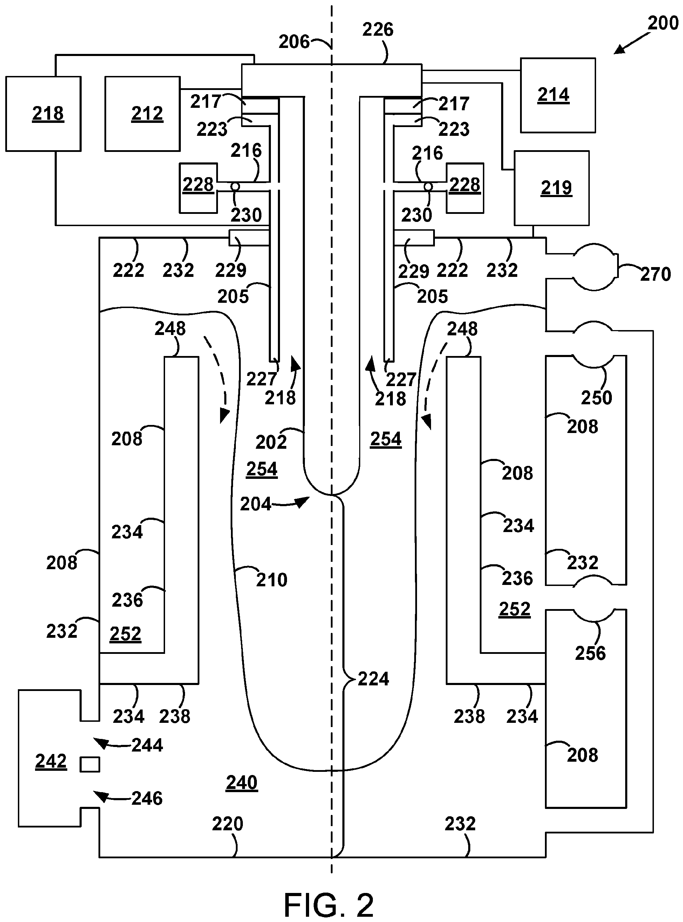

Figure 2 is a schematic cross-sectional diagram of a plasma confinement system 200. The plasma confinement system 200 can have any of the features of the plasma confinement system 100, with differences described below. One difference between the plasma confinement system 100 and the plasma confinement system 200 is the presence of the intermediate electrode 205 as part of the plasma confinement system 200 as described below.

The plasma confinement system 200 includes an inner electrode 202, an intermediate electrode 205 (*e.g*., a substantially annular electrode) that at least partially surrounds the inner electrode 202, and an outer electrode that at least partially surrounds the intermediate electrode 205. The outer electrode includes a solid conductive shell 208 and an electrically conductive material 210 disposed on the solid conductive shell 208 (*e.g*., on the longitudinal axis 206). The electrically conductive material 210 has a melting point within a range of 180° C to 800° C (*e.g.,* 180° C to 550° C) at 1 atmosphere of pressure. In various examples, the electrically conductive material 210 can the take the form of eutectics, alloys, or mixtures of one or more of lithium, lead, or tin.

The inner electrode 202 generally takes the form of an electrically conducting shell (*e.g*., formed of one or more of stainless steel, molybdenum, tungsten, or copper) having a substantially cylindrical body. The inner electrode 202 includes a first end 204 (*e.g*. a rounded end) and an opposing second end 226 (*e.g.,* a substantially disc-shaped end). The first end 204 could be formed of a carbon-based material such as graphite or carbon fiber, or one or more of stainless steel, molybdenum, tungsten, or copper, for example. In some embodiments, the inner electrode 202 has a coating on its outer surface that includes an electrically conductive material having a melting point within a range of 180° C to 800° C (*e.g.,* 180° C to 550° C) at 1 atmosphere of pressure. In various examples, the electrically conductive material can the take the form of eutectics, alloys, or mixtures of one or more of lithium, lead, or tin.

The intermediate electrode 205 includes a first end 227 (*e.g.,* a substantially annular end) between the first end 220 of the outer electrode and the second end 222 of the outer electrode. The intermediate electrode 205 also includes an opposing second end 223 that is substantially annular.

The plasma confinement system 200 further includes a feeding mechanism 212 (*e.g.,* an electromechanical system) that is configured to move the inner electrode 202 in or out of the plasma confinement system 200 along the longitudinal axis 206. During operation, the inner electrode 202 may become eroded by plasma discharge and the feeding mechanism 212 can be operated to feed in the inner electrode 202 to maintain the relative spacing between the inner electrode 202 and other components of the plasma confinement system 200.

The plasma confinement system 200 further includes a cooling system 214 (*e.g.,* a heat exchanger) that is configured to cool the inner electrode 202 during operation of the plasma confinement system 200.

The outer electrode generally takes the form of an electrically conducting (*e.g*., stainless steel) shell having a substantially cylindrical body. The solid conductive shell 208 of the outer electrode includes a solid conductive outer shell 232 and a solid inner shell 234 (*e.g.,* formed of electrically conductive material or high-resistivity material such as silicon carbide) that is disposed within the solid conductive outer shell 232 and in contact with the solid conductive outer shell 232. More specifically, the solid inner shell 234 includes an axial wall 236 that at least partially encircles the longitudinal axis 206 of the plasma confinement system 200 (*e.g.,* partially encircles the inner electrode 202) and a radial wall 238 that couples the axial wall 236 to the solid conductive outer shell 232.

The outer electrode includes a first end 220 and an opposing second end 222. The rounded first end 204 of the inner electrode 202 is between the first end 220 (*e.g.,* a substantially disc-shaped end) of the outer electrode and the second end 222 (*e.g.,* a substantially circular or annular end) of the outer electrode. The radial wall 238 and a first end 220 of the outer electrode form a pool region 240 within the plasma confinement chamber 200. The pool region 240 serves as a reservoir for a substantial amount of the (*e.g*., liquid) electrically conductive material 210 that is in the plasma confinement chamber 200. As shown, the electrically conductive material 210 can also be circulated over the end 248 of the axial wall 236 by a pump 250 and/or a pump 256 as is discussed in more detail below.

The outer electrode (i.e., the solid conductive shell 208 and the electrically conductive material 210) surrounds much of the inner electrode 202. The inner electrode 202 and the outer electrode may be concentric and have radial symmetry with respect to the longitudinal axis 206.

The plasma confinement system 200 also includes a heat exchanger 242, a first port 244 configured to guide the electrically conductive material 210 from the heat exchanger 242 into the pool region 240, and a second port 246 configured to guide the electrically conductive material 210 from the pool region 240 to the heat exchanger 242. The heat exchanger 242 is configured to receive, via the second port 246, the electrically conductive material 210 that is heated within the plasma confinement system 200, extract heat from the electrically conductive material 210, and move (*e.g*., pump) the electrically conductive material 210 back into the pool region 240 via the first port 244 to be heated again by fusion reactions that take place in the plasma confinement system 200. In Figure 2, the first port 244 is shown above the second port 246, however, in other examples the second port 246 could be above the first port 244. One of skill in the art will recognize that, in various examples, the ports 244 and 246 can have various relative positions.

As noted above, the axial wall 236 includes an end 248 that faces the second end 222 of the outer electrode. The plasma confinement system 200 also includes a first pump 250 configured to move the electrically conductive material 210 from the pool region 240 to a region 252 that is outside the axial wall 236 and separated from the pool region 240 by the radial wall 238. The first pump 250 is configured to move the electrically conductive material 210 over the end 248 of the axial wall 236 to a region 254 inside the axial wall 236.

The plasma confinement system 200 also includes a second pump 256 configured to move the electrically conductive material 210 from the pool region 240 to the region 252 that is outside the axial wall 236 and separated from the pool region 240 by the radial wall 238.

The plasma confinement system 200 also includes a pump 270 (*e.g*., a turbo-molecular pump) configured to pump air out of the plasma confinement system 200 such that the base pressure within the plasma confinement system 200 is within the range of 10⁻⁵ to 10⁻⁸ Torr.

The plasma confinement system 200 also includes one or more gas ports 216 configured to direct gas (*e.g*., tritium, deuterium, helium-3, hydrogen, a boron containing gas, or borane) from a gas source 228 (*e.g*., a pressurized gas tank) into an acceleration region 218 that is radially between the inner electrode 202 and the intermediate electrode 205. The acceleration region 218 has a substantially annular cross section defined by the shapes of the inner electrode 202 and the intermediate electrode 205. As shown in Figure 2, the one or more gas ports 216 are positioned axially between the first end 204 of the inner electrode 202 and the second end 226 of the inner electrode 102.

The plasma confinement system 200 also includes a power supply 218 configured to apply a voltage between the inner electrode 102 and the intermediate electrode 205. The power supply 218 will generally take the form of a capacitor bank capable of storing up to 500 kJ or up to 3-4 MJ, for example. A positive terminal of the power supply 218 can be coupled to the inner electrode 102 or alternatively to the intermediate electrode 205.

The plasma confinement system 200 also includes a power supply 219 configured to apply a voltage between the inner electrode 102 and the outer electrode (*e.g*., the solid conductive shell 208). The power supply 219 will generally take the form of a capacitor bank capable of storing up to 500 kJ or up to 3-4 MJ, for example. A positive terminal of the power supply 219 can be coupled to the inner electrode 102 or alternatively to the outer electrode (*e.g*., the solid conductive shell 208).

The plasma confinement system 200 includes an assembly region 224 within the outer electrode between the first end 204 of the inner electrode 202 and the first end 220 of the outer electrode. The plasma confinement system 200 is configured to sustain a Z-pinch plasma within the assembly region 224 as described below.

The plasma confinement system 200 also includes an insulator 217 between the second end 223 of the intermediate electrode 205 and the inner electrode 202 to maintain electrical isolation between the inner electrode 202 and the intermediate electrode 205. The insulator 217 (*e.g*., a ceramic material) generally has an annular cross section.

The plasma confinement system 200 also includes an insulator 229 between the solid conductive shell 208 and the intermediate electrode 205 to maintain electrical isolation between the solid conductive shell 208 and the intermediate electrode 205. The insulator 229 (*e.g*., a ceramic material) generally has an annular cross section.

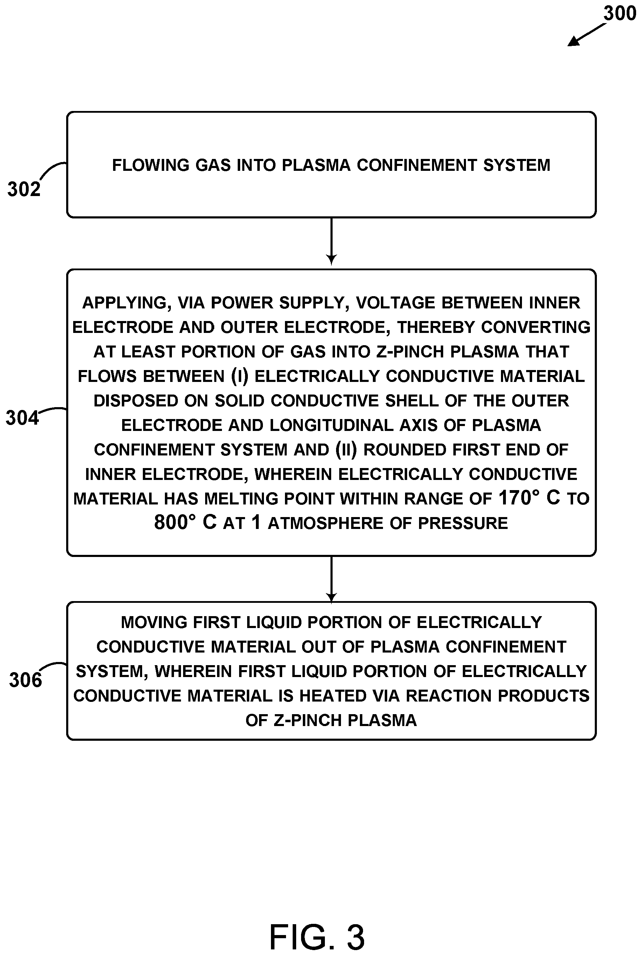

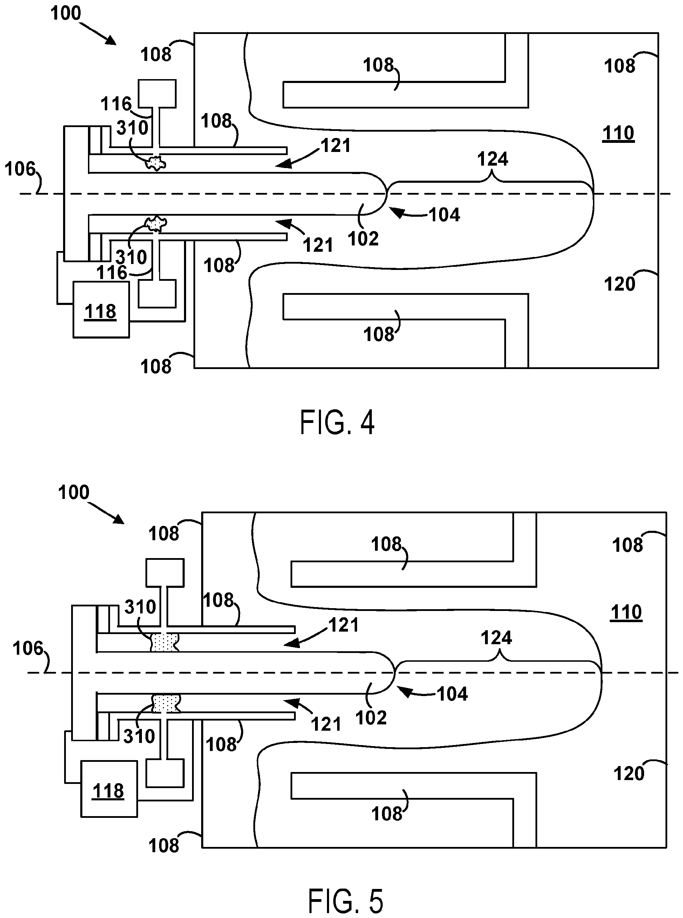

Figure 3 is a block diagram of a method 300 for operating a plasma confinement system (*e.g*., the plasma confinement system 100). The plasma confinement system includes an inner electrode having a rounded first end that is disposed on a longitudinal axis of the plasma confinement system and an outer electrode that at least partially surrounds the inner electrode. Figures 4-9 illustrate some of the aspects of the method 300 as described below. Although Figures 4-9 show the longitudinal axis 106 of the plasma confinement system 100 aligned horizontally, in practice the longitudinal axis 106 generally will be aligned vertically.

At block 302, the method 300 includes flowing gas into the plasma confinement system.

As shown in Figure 4 for example, the one or more gas ports 116 can direct gas 310 (*e.g*., one or more of tritium, deuterium, helium-3, hydrogen, a boron containing gas, or borane) into the acceleration region 121 between the inner electrode 102 and the outer electrode (*e.g*., the solid conductive shell 108) that substantially surrounds the inner electrode 102. Figure 4 shows an initial amount of the gas 310 entering the acceleration region 121 and Figure 5 shows an additional amount of the gas 310 entering the acceleration region 121 thereafter.

After flowing the gas 310, a gas pressure adjacent to the one or more gas ports 116 within the acceleration region 121 might be within a range of 1000 to 5800 Torr (*e.g.,* 5450 to 5550 Torr) prior to the voltage between the inner electrode 102 and the outer electrode (*e.g*., the solid conductive shell 108) being applied via the power supply 118.

At block 304, the method 300 includes applying, via a power supply, a voltage between the inner electrode and the outer electrode, thereby converting at least a portion of the gas into a Z-pinch plasma that flows between (i) an electrically conductive material disposed on a solid conductive shell of the outer electrode and on the longitudinal axis of the plasma confinement system and (ii) the rounded first end of the inner electrode. The electrically conductive material has a melting point within a range of 170° C to 800° C (*e.g*., 180° C to 550 ° C) at 1 atmosphere of pressure.

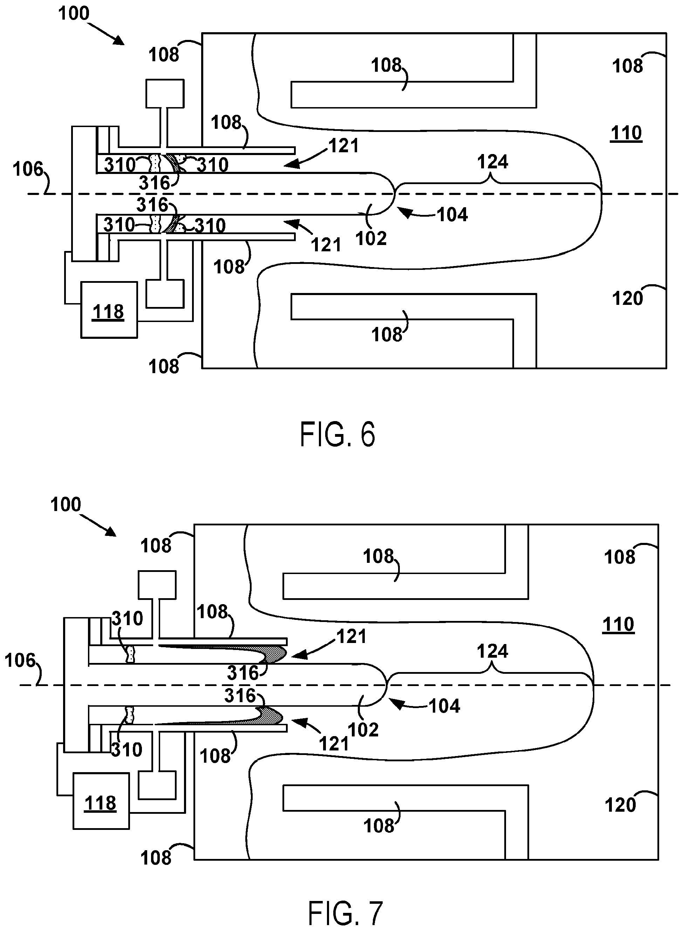

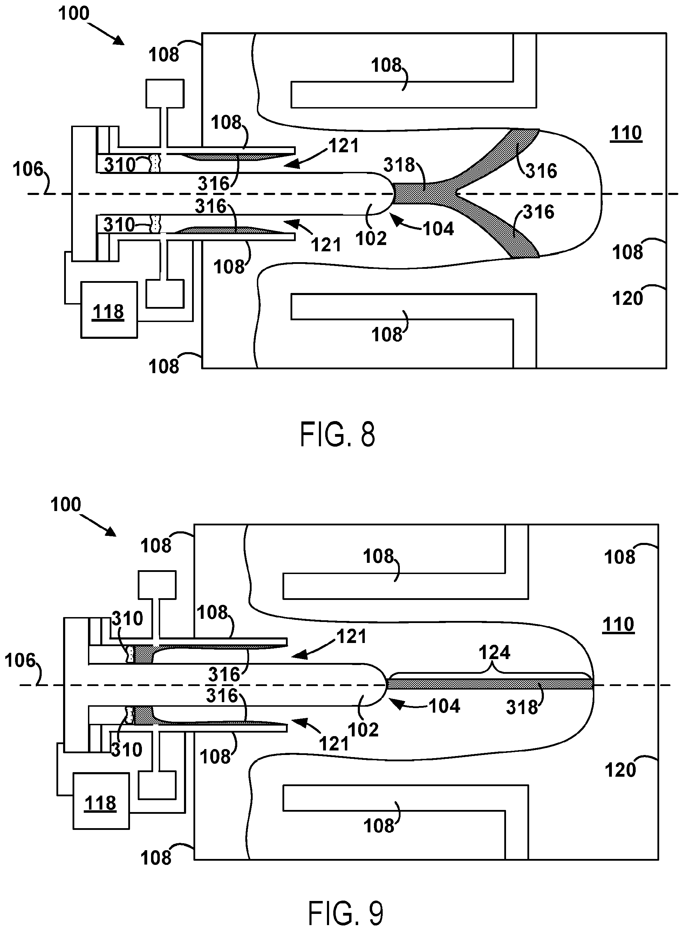

Referring to Figures 6-9 for example, the power supply 118 can apply a voltage between the inner electrode 102 and the outer electrode (*e.g*., the solid conductive shell 108), thereby converting at least a portion of the gas 310 into a Z-pinch plasma 318 (see Figures 8-9) that flows between (i) the electrically conductive material 110 disposed on the solid conductive shell 108 of the outer electrode and on the longitudinal axis 106 of the plasma confinement system 100 and (ii) the rounded first end 104 of the inner electrode 102.

For example, the power supply 118 can apply the voltage between the inner electrode 102 and the solid conductive shell 108, thereby converting at least a portion of the gas 310 into a plasma 316 (see Figures 6-9) having a substantially annular cross section. Due to the magnetic field generated by its own current, the plasma 316 may flow axially within the acceleration region 121 toward the first end 104 of the inner electrode 102 and the first end 120 of the outer electrode as shown sequentially in Figures 6-9.

As shown in Figures 8 and 9, when the plasma 316 moves beyond the acceleration region 121, the Z-pinch plasma 318 is established in the assembly region 124 within the outer electrode between (i) the electrically conductive material 110 disposed on the solid conductive shell 108 of the outer electrode and on the longitudinal axis 106 of the plasma confinement system 100 and (ii) the rounded first end 104 of the inner electrode 102.

The Z-pinch plasma 318 can exhibit sheared axial flow and have a radius between 0.1 mm and 5 mm, an ion temperature between 900 and 50,000 eV, an electron temperature greater than 500 eV (*e.g*., up to 50,000 eV), an ion number density greater than 1×10²³ ions/m³, an electron number density of greater than 1×10²³ electrons/m³, a magnetic field over 8 T, and/or may be stable for at least 10 µs.

At block 306, the method 300 includes moving a first liquid portion of the electrically conductive material out of the plasma confinement system. The first liquid portion of the electrically conductive material is heated via reaction products (*e.g*., neutrons and other energetic particles) of the Z-pinch plasma.

The heat exchanger 142 can receive (*e.g*., pump), via the second port 146, a portion of the electrically conductive material 110 that is heated within the plasma confinement system 100, extract heat from the electrically conductive material 110, and move (*e.g*., pump) the electrically conductive material 110 back into the pool region 140 via the first port 144 to be heated again by fusion reactions that take place in the plasma confinement system 100. Prior to forming a plasma discharge within the plasma confinement system 100, the electrically conductive material 110 is generally heated (*e.g*., melted) into a liquid state using a (*e.g*., electric) heating element disposed within the plasma confinement system 100.

The plasma confinement system 100 includes a feeding mechanism 112 (*e.g*., an electromechanical system) that can move the inner electrode 102 in or out of the plasma confinement system 100 along the longitudinal axis 106. During operation, the inner electrode 102 may become eroded by plasma discharge and the feeding mechanism 112 can be operated to feed in the inner electrode 102 to maintain the relative spacing between the inner electrode 102 and other components of the plasma confinement system 100.

In addition, the pumps 150 and 156 can move or circulate the electrically conductive material 110 over the outer electrode (*e.g.,* over the solid conductive shell 108) so that different portions of the electrically conductive material 110 can be used to absorb current and/or heat (*e.g*., at the longitudinal axis 106) from the Z-pinch plasma 318 over time. During operation of the plasma confinement system 100, much of or all of the electrically conductive material 110 will generally be in a liquid state.

In some embodiments, the pumps 150 and 156 move the electrically conductive material 110 such that the electrically conductive material 110 moved over the outer electrode (*e.g.,* over the solid conductive shell 108) is moved in an azimuthal direction (*e.g*., into and/or out of the page) and/or an axial direction with respect to the longitudinal axis 106 of the plasma confinement system 100.

More specifically, the pumps 150 or 156 can move the electrically conductive material 110 from the pool region 140 to a region 152 that is outside the axial wall 136 and separated from the pool region 140 by the radial wall 138. Additionally, the pumps 150 or 156 can move the electrically conductive material 110 over the end 148 of the axial wall 136 to a region 154 inside the axial wall 136, and back toward the pool region 140.

In various embodiments, the voltage applied between the inner electrode 102 and the outer electrode (*e.g*., the solid conductive shell 108) is within a range of 2 kV to 30 kV. The voltage applied between the inner electrode and the outer electrode (*e.g*., the solid conductive shell 108) can result in a radial electric field within a range of 30 kV/m to 500 kV/m.

In some embodiments, the Z-pinch plasma 318 has a radius between 0.1 mm and 5 mm, an ion temperature between 900 and 50,000 eV, and an electron temperature greater than 500 eV (*e.g*., up to 50,000 eV). The Z-pinch plasma 318 can have an ion number density greater than 1×10²³ ions/m³ or an electron number density of greater than 1×10²³ electrons/m³, and can exhibit sheared flow with a magnetic field of over 8 T. The Z-pinch plasma 318 can exhibit stability for at least 10 µs.

In some embodiments, the reaction products of the Z-pinch plasma 318 include neutrons. As such, during operation of the plasma confinement system 100, neutrons and a portion of the electrically conductive material 110 can be consumed to generate additional tritium fuel for recovery at the heat exchanger 142. The reactive nature of the electrically conductive material 110 can also serve to reduce the base pressure within the plasma confinement system 100 by capturing vapor particles.

Some embodiments include controlling a thickness of the electrically conductive material 110 on the solid conductive shell 108 by adjusting a rate at which the heat exchanger 142 moves the electrically conductive material 110 into the pool region 140 from the heat exchanger 142 or by adjusting a rate at which the electrically conductive material 110 moves to the heat exchanger 142 from the pool region 140. Increasing the rate at which the electrically conductive material 110 flows into the pool region 140 will generally increase the thickness of the electrically conductive material 110 on the solid conductive shell 108. Increasing the rate at which the electrically conductive material 110 flows out of the pool region 140 to the heat exchanger 142 will generally decrease the thickness of the electrically conductive material 110 on the solid conductive shell 108.

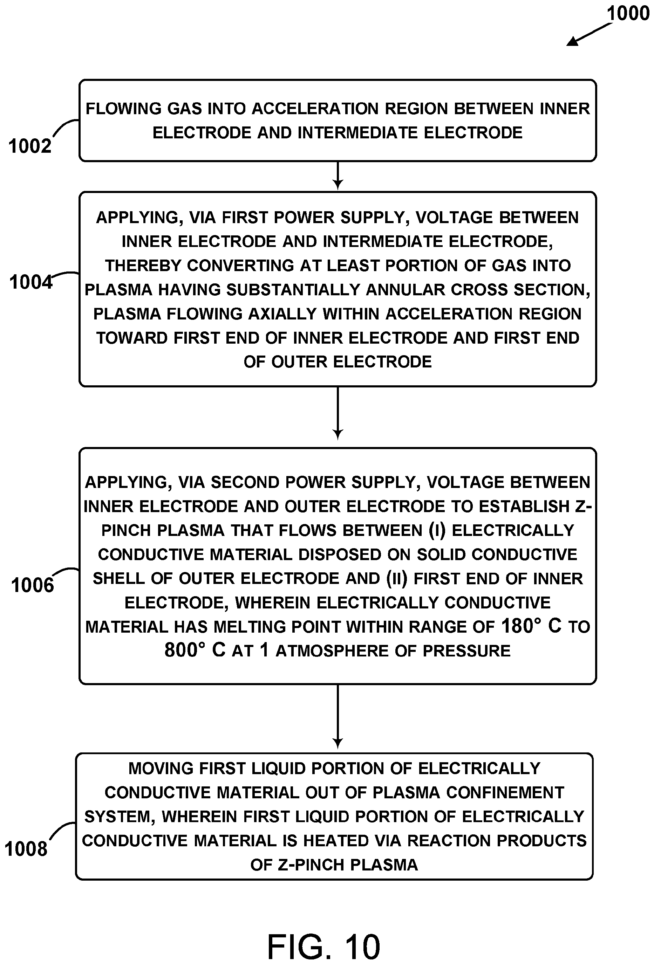

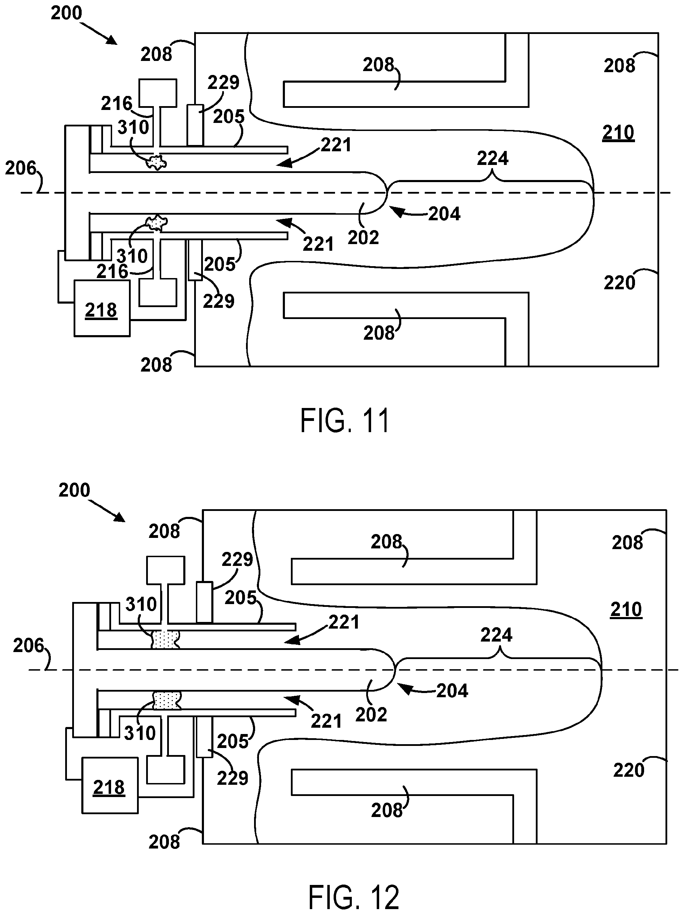

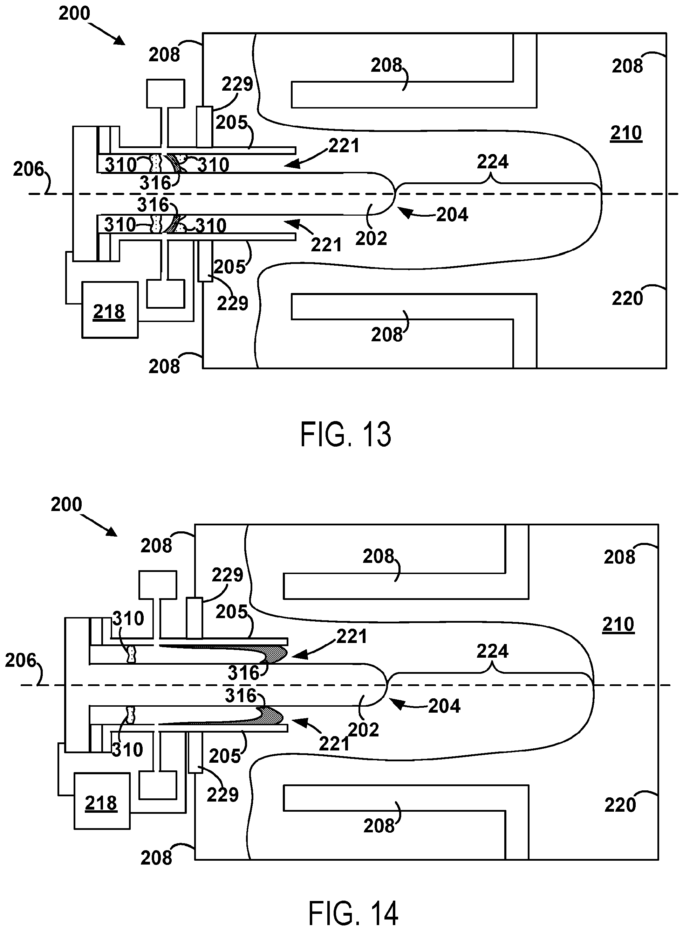

Figure 10 is a block diagram of a method 1000 for operating a plasma confinement system (*e.g*., the plasma confinement system 200). The plasma confinement system includes an inner electrode, an intermediate electrode that at least partially surrounds the inner electrode, and an outer electrode that at least partially surrounds the intermediate electrode. Figures 11-16 illustrate some of the aspects of the method 1000 as described below. Although Figures 11-16 show the longitudinal axis 206 of the plasma confinement system 200 aligned horizontally, in practice the longitudinal axis 206 generally will be aligned vertically

At block 1002, the method 1000 includes flowing gas into an acceleration region between the inner electrode and the intermediate electrode.

As shown in Figure 11 for example, the one or more gas ports 216 can direct gas 310 (*e.g*., one or more of tritium, deuterium, helium-3, hydrogen, a boron containing gas, or borane) into the acceleration region 221 between the inner electrode 202 and the intermediate electrode 205 that partially surrounds the inner electrode 202. Figure 11 shows an initial amount of the gas 310 entering the acceleration region 221 and Figure 12 shows an additional amount of the gas 310 entering the acceleration region 221 thereafter.

After flowing the gas 310, a gas pressure adjacent to the one or more gas ports 216 within the acceleration region 221 might be within a range of 1000 to 5800 Torr (*e.g.,* 5450 to 5550 Torr) prior to the voltage between the inner electrode 202 and the intermediate electrode 205 being applied via the power supply 218.

At block 1004, the method 1000 includes applying, via a first power supply, a voltage between the inner electrode and the intermediate electrode, thereby converting at least a portion of the gas into a plasma having a substantially annular cross section, the plasma flowing axially within the acceleration region toward a first end of the inner electrode and a first end of the outer electrode.

Referring to Figures 11-14 for example, the power supply 218 can apply a voltage between the inner electrode 202 and the intermediate electrode 205, thereby converting at least a portion of the gas 310 into a plasma 316 having a substantially annular cross section. The plasma 316 can flow axially within the acceleration region 221 toward a first end 204 of the inner electrode 202 and a first end 220 of the outer electrode. Due to the magnetic field generated by its own current, the plasma 316 can flow axially within the acceleration region 121 toward the first end 204 of the inner electrode 202 and the first end 220 of the outer electrode as shown sequentially in Figures 11-14.

At block 1006, the method 1000 includes applying, via a second power supply, a voltage between the inner electrode and the outer electrode to establish a Z-pinch plasma that flows between (i) an electrically conductive material disposed on a solid conductive shell of the outer electrode and (ii) the first end of the inner electrode. The electrically conductive material has a melting point within a range of 180° C to 800° C (*e.g*., 180° C to 550° C) at 1 atmosphere of pressure.

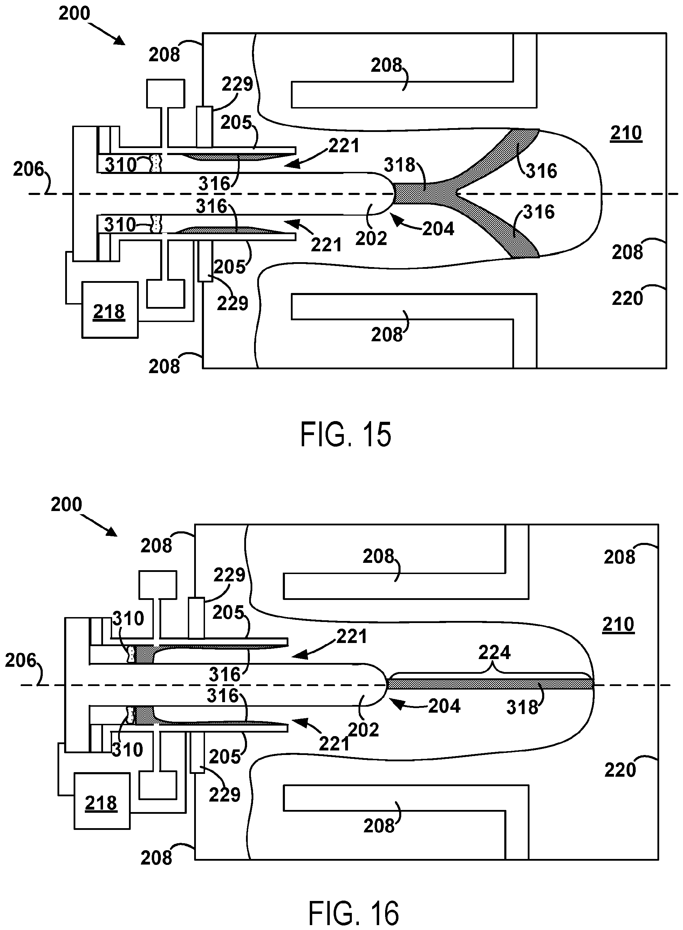

Referring to Figures 15 and 16 for example, the power supply 219 can apply a voltage between the inner electrode 202 and the outer electrode (*e.g*., the solid conductive shell 208) to establish the Z-pinch plasma 318 that flows between (i) the electrically conductive material 210 disposed on the solid conductive shell 208 of the outer electrode and (ii) the first end 204 of the inner electrode 202. The electrically conductive material 210 has a melting point within a range of 180° C to 800° C (*e.g.,* 180° C to 550° C) at 1 atmosphere of pressure.

As shown in Figures 15 and 16, when the plasma 316 moves beyond the acceleration region 221, the Z-pinch plasma 318 is established in the assembly region 224 within the outer electrode between (i) the electrically conductive material 210 disposed on the solid conductive shell 208 of the outer electrode and on the longitudinal axis 206 of the plasma confinement system 200 and (ii) the rounded first end 204 of the inner electrode 202.

The Z-pinch plasma 318 can exhibit sheared axial flow and have a radius between 0.1 mm and 5 mm, an ion temperature between 900 and 50,000 eV, an electron temperature greater than 500 eV (*e.g*., up to 50,000 eV), an ion number density greater than 1×10²³ ions/m³, an electron number density of greater than 1×10²³ electrons/m³, a magnetic field over 8 T, and/or may be stable for at least 10 µs.

At block 1008, the method 1000 includes moving a first liquid portion of the electrically conductive material out of the plasma confinement system. The first liquid portion of the electrically conductive material is heated via reaction products of the Z-pinch plasma.

Referring to Figure 2 for example, the heat exchanger 242 can receive (*e.g*., pump), via the second port 246, a portion of the electrically conductive material 210 that is heated within the plasma confinement system 200, extract heat from the electrically conductive material 210, and move (*e.g*., pump) the electrically conductive material 210 back into the pool region 240 via the first port 244 to be heated again by fusion reactions that take place in the plasma confinement system 200. Prior to forming a plasma discharge within the plasma confinement system 200, the electrically conductive material 210 is generally heated (*e.g*., melted) into a liquid state using a (*e.g*., electric) heating element disposed within the plasma confinement system 200.

The plasma confinement system 200 includes a feeding mechanism 212 (*e.g*., an electromechanical system) that can move the inner electrode 202 in or out of the plasma confinement system 200 along the longitudinal axis 206. During operation, the inner electrode 202 may become eroded by plasma discharge and the feeding mechanism 212 can be operated to feed in the inner electrode 202 to maintain the relative spacing between the inner electrode 202 and other components of the plasma confinement system 200.

In addition, the pumps 250 and 256 can move or circulate the electrically conductive material 210 over the outer electrode (*e.g.,* over the solid conductive shell 208) so that different portions of the electrically conductive material 210 can be used to absorb current and/or heat (*e.g*., at the longitudinal axis 206) from the Z-pinch plasma 318 over time. During operation of the plasma confinement system 200, much of or all of the electrically conductive material 210 will generally be in a liquid state.

In some embodiments, the pumps 250 and 256 move the electrically conductive material 210 such that the electrically conductive material 210 moved over the outer electrode (*e.g.,* over the solid conductive shell 208) is moved in an azimuthal direction (*e.g*., into and/or out of the page) and/or an axial direction with respect to the longitudinal axis 206 of the plasma confinement system 100.

More specifically, the pumps 250 or 256 can move the electrically conductive material 210 from the pool region 240 to a region 252 that is outside the axial wall 236 and separated from the pool region 240 by the radial wall 238. Additionally, the pumps 250 or 256 can move the electrically conductive material 210 over the end 248 of the axial wall 236 to a region 254 inside the axial wall 236, and back toward the pool region 240.

In various embodiments, the voltage applied between the inner electrode 202 and the outer electrode (*e.g*., the solid conductive shell 108) or between the inner electrode 202 and the intermediate electrode 205 is within a range of 2 kV to 30 kV. The voltage applied can result in electric fields within a range of 30 kV/m to 500 kV/m.

In some embodiments, the Z-pinch plasma 318 has a radius between 0.1 mm and 5 mm, an ion temperature between 900 and 50,000 eV, and an electron temperature greater than 500 eV (*e.g*., up to 50,000 eV). The Z-pinch plasma 318 can have an ion number density greater than 1×10²³ ions/m³ or an electron number density of greater than 1×10²³ electrons/m³, and can exhibit sheared flow with a magnetic field of over 8 T. The Z-pinch plasma 318 can exhibit stability for at least 10 µs.

In some embodiments, the reaction products of the Z-pinch plasma 318 include neutrons. As such, during operation of the plasma confinement system 200, neutrons and a portion of the electrically conductive material 210 can be consumed to generate additional tritium fuel for recovery at the heat exchanger 242. The reactive nature of the electrically conductive material 210 can also serve to reduce the base pressure within the plasma confinement system 200 by capturing vapor particles.

Some embodiments include controlling a thickness of the electrically conductive material 210 on the solid conductive shell 208 by adjusting a rate at which the heat exchanger 242 moves the electrically conductive material 210 into the pool region 240 from the heat exchanger 242 or by adjusting a rate at which the electrically conductive material 210 moves to the heat exchanger 242 from the pool region 240. Increasing the rate at which the electrically conductive material 210 flows into the pool region 240 will generally increase the thickness of the electrically conductive material 210 on the solid conductive shell 208. Increasing the rate at which the electrically conductive material 210 flows out of the pool region 240 to the heat exchanger 242 will generally decrease the thickness of the electrically conductive material 210 on the solid conductive shell 208.

While various example aspects and example embodiments have been disclosed herein, other aspects and embodiments will be apparent to those skilled in the art. The various example aspects and example embodiments disclosed herein are for purposes of illustration and are not intended to be limiting, with the true scope and spirit being indicated by the following claims.

## Claims

1. A plasma confinement system, comprising:
an outer electrode comprising an electrically conductive material;
a pumping system configured to circulate the electrically conductive material over the outer electrode when the electrically conductive material is in a liquid state;
an inner electrode, wherein a first end of the inner electrode is between a first end of the outer electrode and a second end of the outer electrode, and wherein the inner electrode and the outer electrode have radial symmetry with respect to a longitudinal axis of the plasma confinement system; and
a power supply configured to apply a voltage between the inner electrode and the outer electrode to cause a Z-pinch plasma having a sheared axial flow to be established between the inner electrode and the outer electrode.

2. The plasma confinement system of claim 1, wherein the electrically conductive material comprises an alloy.

3. The plasma confinement system of any one of claims 1 or 2, wherein the inner electrode comprises a carbon-based material or one or more of stainless steel, molybdenum, tungsten, or copper.

4. The plasma confinement system of any one of claims 1 to 3, further comprising one or more gas ports positioned axially between the first end of the inner electrode and a second end of the inner electrode opposite to the first end of the inner electrode.

5. The plasma confinement system of any one of claims 1 to 4, further comprising a ceramic insulator between the inner electrode and the second end of the outer electrode.

6. The plasma confinement system of any one of claims 1 to 5, wherein:
the inner electrode and the outer electrode are concentric; and/or
an acceleration region having a substantially annular cross section forms a volume radially between the inner electrode and the outer electrode.

7. The plasma confinement system of any one of claims 1 to 6, wherein:
the outer electrode substantially surrounds the inner electrode; and/or
the outer electrode surrounds a majority of a volume occupied by the inner electrode.

8. The plasma confinement system of any one of claims 1 to 7, wherein each of the inner electrode and the outer electrode has a substantially cylindrical body.

9. The plasma confinement system of any one of claims 1 to 8, wherein the first end of the outer electrode is opposite to the second end of the outer electrode.

10. The plasma confinement system of any one of claims 1 to 9, wherein the power supply is configured to sustain the Z-pinch plasma in an assembly region formed as a cylindrical volume within the outer electrode.

11. The plasma confinement system of any one of claims 1 to 10, further comprising a pump configured to pump air out of the plasma confinement system such that a base pressure within the plasma confinement system is within a range of 10⁻⁵ Torr and 10⁻⁸ Torr.

12. The plasma confinement system of any one of claims 1 to 11, wherein the sheared axial flow is radially sheared with respect to the longitudinal axis.

13. A method for operating the plasma confinement system of any one of claims 1 to 12, the method comprising:
applying, via the power supply, the voltage between the inner electrode and the outer electrode; and
moving a first liquid portion of the electrically conductive material out of the plasma confinement system.

14. The method of claim 13, wherein the voltage applied between the inner electrode and the outer electrode is within a range of 2 kV to 30 kV.

15. The method of any one of claims 13 or 14, wherein the Z-pinch plasma has a radius between 0.1 mm and 5 mm, an ion temperature between 900 eV and 50,000 eV, and/or an electron temperature greater than 500 eV, and/or is stable for at least 10 µs.
